# EUROPEAN PATENT APPLICATION

(11) **EP 1 241 832 A2**
(43) Date of publication of application: **18.09.2002**
(21) Application number: 01402945.8
(22) Date of filing: 16.11.2001
(51) Int. Cl.: H04L 12/28, H04L 29/06

(54) **Method and system for providing internet services**

(30) Priority: 16.11.2000 RU 2000001150
(71) Applicant: Koromyslichenko, Vladislav Nikolaevich, 190121 Saint-Petersburg (RU)
(72) Inventor: Koromyslichenko, Vladislav Nikolaevich, 190121 Saint-Petersburg (RU)
(74) Representative: Thévenet, Jean-Bruno

(57) **Abstract**

The invention is comprises of a system and method for creating and using a regional Internet-service network installed atop an existing wire radio-transmission network in order to provide broadband access to integrated telecommunication services for a high number of users simultaneously at a high data rate. Such an Internetwork solution ensures quality service for a wide-range of Internet/intranet applications. Such applications include traditional data transfer; real-time control; multimedia and interactive collaboration supported by efficient management of bandwidth and buffering resources; multiple service classes (i.e., persons receiving access to the network at varying speeds and bandwidths); admission control; flexible resource allocation; and explicit price-performance control. The system comprises an overall network structure with individual users and LANs, interconnected by local and regional backbones into a substantive network that utilizes IP protocols accessed to the Internet.

## Description

### Field of the Invention

The subject invention is directed to the provision of Internet services, and particularly to provision of Internet services over a radio-transmission grid.

### Background

Most Russian cities share a wire radio-transmission grid that was installed in the 1930s to broadcast radio programs, and as a means of allowing the government to communicate on a secure basis with its citizens in case of emergency and war. This radio-transmission grid has been expanded and upgraded since its initial installation.

The radio-transmission grid in Russian cities includes an infrastructure of telecommunication lines that are connected to each building in the city, both residential and commercial. Within each such building, pairs of twisted copper wires connect the telecommunication lines to each individual sub-unit (apartment, office, etc.) within the building. Each sub-unit is outfitted with one or more jack/outlets, which are used to connect to a radio-receiver. For example, there are more than of 3.1 million radio-jacks in residential and commercial units in St. Petersburg and the surrounding suburbs. Over 5,000 kilometers of telecommunication lines have been laid throughout this area to support the radio-transmission grid.

The radio-transmission grid has been upgraded repeatedly to incorporate the latest available technology. Existing hardware in use by the St. Petersburg grid permits three-program radio-transmission. The grid employs advanced, highly efficient amplification equipment to provide, among other services, voice transmission with limited distortion. To date, this radio-transmission network structure has only been used for radio. No one has used such a network to provide Internet-related services.

Currently-known Internet transmission networks have deficiencies that include the following. Internet access networks based on dial-up technology (public telephone lines) are unable to (i) connect all of their customers/subscribers to Internet services simultaneously; (ii) efficiently use bandwidth resources; or (iii) provide a justified data rate for different levels of clients and services.

Internet access networks employing allocated communication channels impose additional operating costs that result in increased Internet subscription prices, since an independent access channel must be provided to each potential user.

Internet-access networks using ADSL modems limit the network system by imposing a limitation on the maximum available data rate, which typically cannot exceed 8 Mbps. These networks also require additional equipment to be installed at the telephone switching stations and at each customer's site, dramatically increasing the cost of service.

Use of Power Line Telecommunication (PLT) technology as an Internet access solution is limited to "narrowband" applications such as telemetry. This technology is primarily useful only for reducing operational costs of the power-supply utilities, and suffers from a lack of standards and inter-operability.

Wireless network technologies have limited bandwidth (up to 50 Mbps), undeveloped telecommunication standards and infrastructure, and also are expensive compared to other Internet access technology.

### Summary

In general, the invention includes a system and method for permitting existing radio-transmission lines to be used for Internet access and related information technology (IT) services, without interfering with the radio-transmission network's primary purpose - radio program broadcasting and special announcements by a government to its citizens in case of emergency.

A preferred embodiment allows the radio-transmission network to be split to permit uses of the same telecommunication lines for IT applications. These uses include the delivery of (i) standard (modem-based) Internet access, (ii) high-speed Internet access, (iii) Internet telephony, (iv) real-time, non-compressed, audio, and video transmission, and (v) high speed data transmission.

A preferred embodiment includes a regional Internet-service network installed atop an existing wire radio-transmission network. The preferred embodiment is able to provide broadband access to integrated telecommunication services for a high number of users simultaneously at a high data rate. Such an Internetwork solution ensures quality service for a wide-range of Internet/intranet applications. Such applications include traditional data transfer; real-time control; multimedia and interactive collaboration supported by efficient management of bandwidth and buffering resources; multiple service classes (i.e., persons receiving access to the network at varying speeds and bandwidths); admission control; flexible resource allocation; and explicit price-performance control. Physically, a preferred system comprises an overall network structure with individual users and LANs, interconnected by local and regional backbones into a substantive network that utilizes IP protocols accessed to the global information superhighway.

### Brief Description of the Drawings

**FIG. 1** is a block diagram of the basic components of a radio-transmission network.
**FIG. 2** is a block diagram of the components of a network that is an embodiment of the subject invention.
**FIG. 3** is a block diagram of the basic components of the network, showing in greater detail the connectivity between components.
**FIGS. 4, 4A,** and **4B** are more detailed block diagrams of certain components used to form the network of the subject invention.
**FIGS. 5, 6, and 7** are flow charts that illustrate in general the operation of the network of the subject invention.

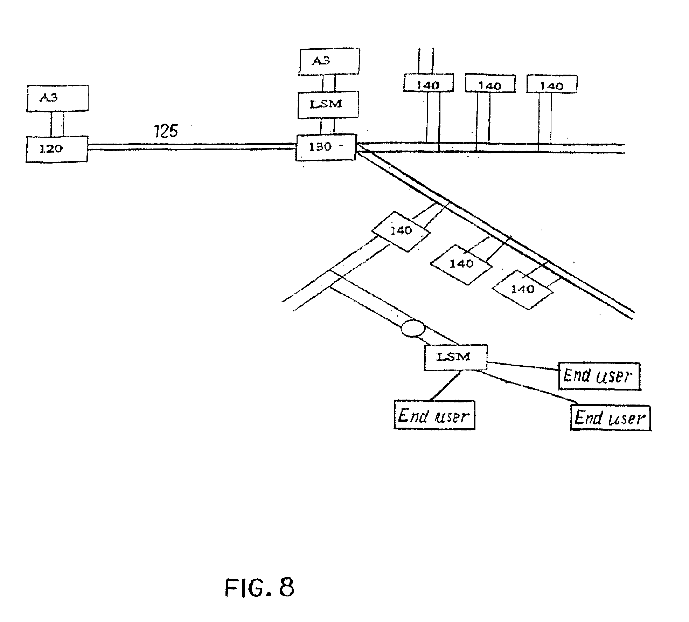

**FIG. 8** illustrates variations in network topology of the subject invention.
**FIG. 9** depicts components of an inter-building transformer station.

### Detailed Description of Preferred Embodiments

A first preferred embodiment of the subject invention includes a system and method for providing Internet service over an existing radio-transmission network.

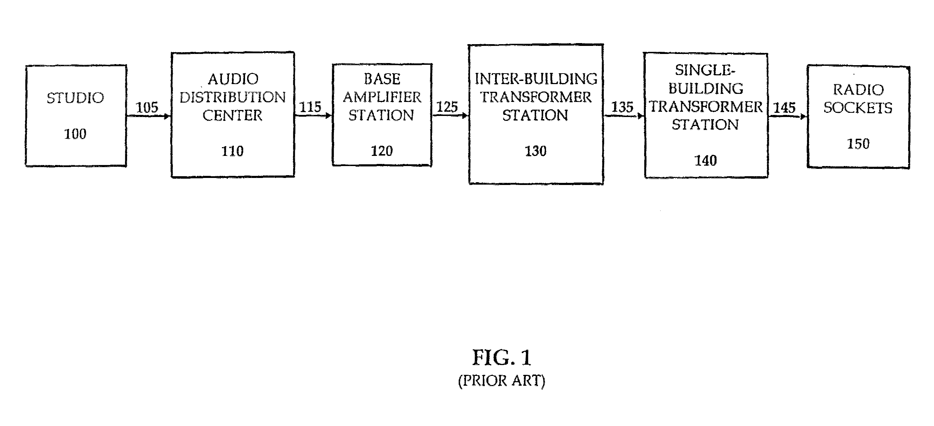

**FIG. 1** depicts a conventional radio-transmission network. The network includes a studio **100** which is the source of all radio program transmissions. The studio is connected to an audio distribution center (ADC) **110** by a pair of copper wires **105.** The ADC is similarly connected to a plurality of base amplifier stations (BAS) **120.** Each base amplifier station **120** is connected to an ADC **110** by its own pair of copper wires **115.**

The ADC **110** includes a plurality of amplifiers for receiving radio signals from the studio (via copper wires **105)** and transmitting the amplified signals to base amplifier stations **120.** Each base amplifier station **120** also includes an amplifier for amplifying the received radio signals for re-transmission further downstream. More specifically, the output of each base amplifier station **120** is connected to an inter-building transformer station **130.**

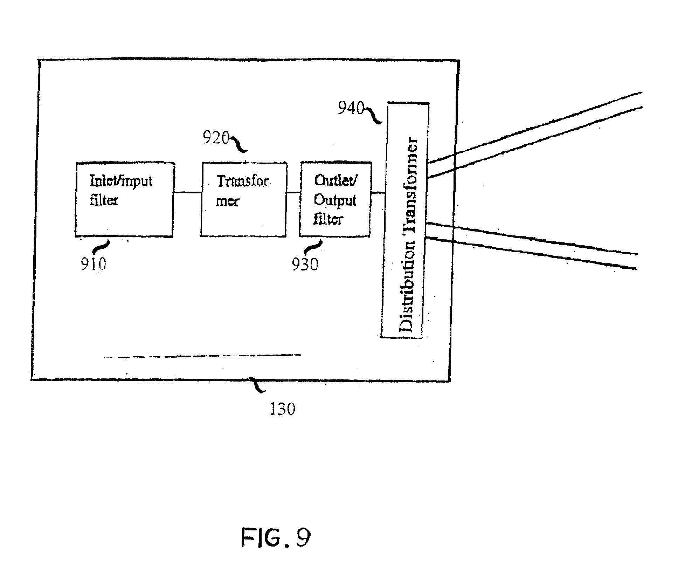

Each inter-building transformer station (ITS) **130** includes input terminals for receiving signals from base amplifier station **120** via copper wires **125.** Each ITS **130** includes an inlet/input filter **910,** a transformer **920,** an outlet/output filter **930,** and a distribution transformer **940** (see **FIG. 9).** Each ITS **130** also includes output terminals connected to a plurality of single-building transformer stations (STS) **140.**

Each STS is typically associated with a single building (such as an apartment complex or office building). The STS **140** includes an input terminal for receiving radio transmissions from an inter-building transformer station **130.** STS **140** also includes an output terminal connected to a copper wire pair **145.** The copper wires **145** run throughout the building to a plurality of radio sockets **150,** each radio socket typically residing in a single apartment or office within the building. Each radio socket is connected to a radio speaker for generating acoustic signals representative of the radio signals received via copper wires **145.**

Using this network, studio **100** broadcasts radio signals by transmitting the radio signals over copper wires **105** to ADC **110.** The ADC amplifies the received signal and re-transmits the amplified signal over each pair of copper wires **115** to a corresponding BAS **120.** Each BAS **120** amplifies the received radio signal and re-transmits the amplified signal over each pair of copper wires **125** to an ITS **130.** Each ITS **130** transforms the signal and transmits it over copper wires **135** to a plurality of STS units **140.** Each receiving STS **140** transforms the signal and transmits it over copper wires **145** to a plurality of radio sockets **150.** Thus, the radio signal emitted by studio 100 propagates throughout the radio network to every radio socket in the network. The radio signals are typically in the 0-10kHz range.

For simplicity of explanation, we assume that each radio socket of the radio-transmission network is located in an apartment, although as discussed above, such sockets are also located in offices,separate homes, etc. That is, the term "apartment" is used herein henceforth generically to refer to any place that has a radio-socket connection to a radio-transmission grid.

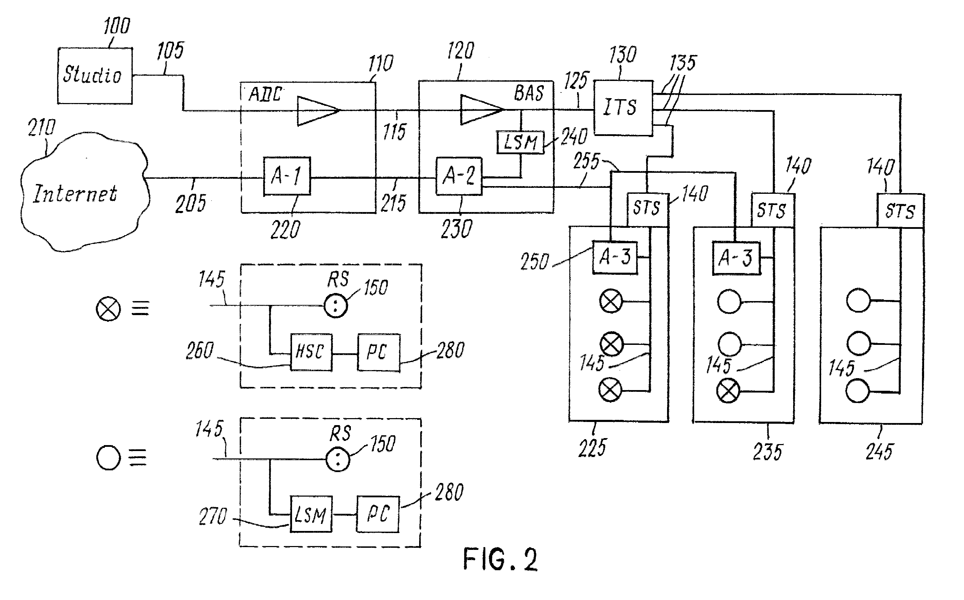

A preferred embodiment of the present invention uses the above-described existing radio network to provide Internet-based services to apartments that have radio sockets. In a preferred system (see **FIG. 2),** a Central Switching and Routing Unit (A-1) **220** is installed into a structure housing ADC **110.** The A-1 unit is preferably the main operating point of the system, and is connected to the Internet **210** via high-speed fibre-optic lines **205.** It monitors, controls, and supervises the quality of service and the security of the entire system. It also performs switching and routing for the system; supports IP telephony, IP TV, high-speed access, and other Internet/intranet applications; provides system access to the Internet **210;** and provides database services for system users and administrators. Preferred components for the construction of the A-1 unit are listed below in Table 1.

Preferably the A-1 unit is connected by underground fibre-optic lines **215** to a plurality of area switching and routing units (A-2) **230,** each of which is installed into a structure that houses a BAS **120.** Each A-2 unit is the main operating point of an area network typically including sixty to one hundred residential or commercial buildings. The A-2 unit performs switching and routing for the entire area network; supports IP telephony, IP TV, high-speed access, and other Internet/intranet applications; and provides access to the remainder of the system. The number of A-2 units **230** depends on the number of buildings in the area, since each unit typically services sixty to one hundred buildings. Preferred components for the construction of the A-2 units are listed below in Table 2.

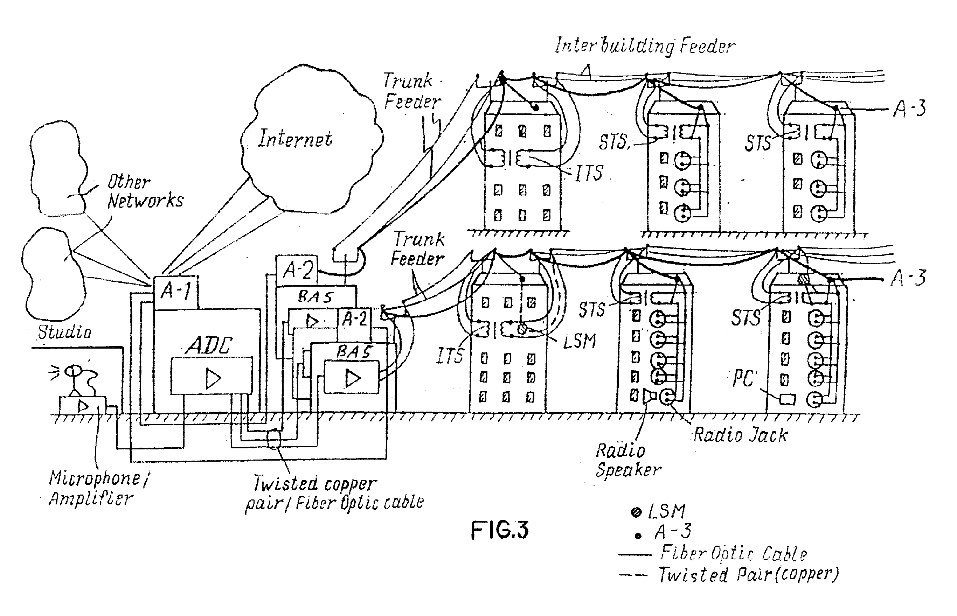

As shown in **FIGS. 2** and **3,** each A-2 unit is connected to one or more low-speed modems (LSMs) **170.** Each LSM is also connected to a copper wire pair of the radio transmission network, preferably at a point between BAS **120** and an ITS **130** on copper wires **125.** The LSM receives Internet transmissions from the A-2 unit and re-transmits them on copper wires **125.** The term "low-speed modem" here merely refers to the fact that transmission is over copper lines instead of relatively high-speed fibre-optic lines -- there is no requirement that the speed of transmission actually be slower than that over the high-speed optical lines. Likewise, the term "modem" is not intended to be unduly restrictive. In fact, the LSMs **240** are preferably 10Base-S switches that comply with the 10Base-S protocol, and not modems in the traditional "modulator-demodulator" sense. However, those skilled in the art will recognize that a variety of modem types (including, for example, ISDN and DSL-type "modems") and transmission protocols could be used.

The transmissions by LSM **240** on wires **125** are forwarded by ITS **130** to a plurality of STS units **140.** Each STS unit then forwards the transmission throughout its associated building by transmitting the signal on copper wires **145.**

**As** shown in **FIG. 2,** some apartments may include an LSM **270** connected to the apartments' radio sockets **150** for receiving the Internet transmissions on wires **145.** Each LSM **270** is connected to a personal computer **280.** In this manner, computer **280** can receive Internet transmissions. Similarly, the computer **280** can also send Internet transmissions via LSM **270** because the modem signal travels bi-directionally over the radio-transmission network without interfering with the existing radio signals. Such transmissions propagate over the building wires 145 to STS **140.** STS **140** then forwards the transmission to ITS **130** via wires **135.** Similarly ITS **130** forwards the transmission to LSM **240** via wires **125.** LSM **240** receives such Internet transmissions from wires **125** and forwards them to A-2 unit **230,** which then transmits these signals upstream to the Internet via optical fiber **215,** A-1 unit **220,** and optical fiber **205.** In a preferred embodiment, each LSM **240** is a 10Base-S switch and router, and each LSM **270** is a 10Base-S interface.

Other apartments may include a high-speed interface card HSC **260** connected between the building wires **145** and a personal computer **280.** Each HSC is a network interface card that communicates between a personal computer **280** and the wires **145** of the building. To permit such HSC cards to communicate over the Internet, each A-2 unit **230** is connected by high-speed fibre-optic lines **255** to a plurality of A-3 units **250,** each of which is located in a single building. Each A-3 unit **250** is connected to the intra-building wires **145.** The A-3 unit **250** uses these existing wires to form a local area network for the building.

In a preferred embodiment, HSC **260** and LSM **270** are network interfaces which employ the 10Base-S protocol. Each HSC/LSM unit is used to communicate with an LSM **240** or an A-3 unit **250.** Which type of unit an HSC/LSM unit communicates with is determined by the user's subscription level: HSC/LSMs of high-speed subscribers communicate with A-3 units **250,** while HSC/LSMs of low-speed subscribers communicate with LSMs **240.** A-3 units are capable of communicating with high-speed interface cards using 10Base-S, 100Base-T, or 1000Base-T protocols.

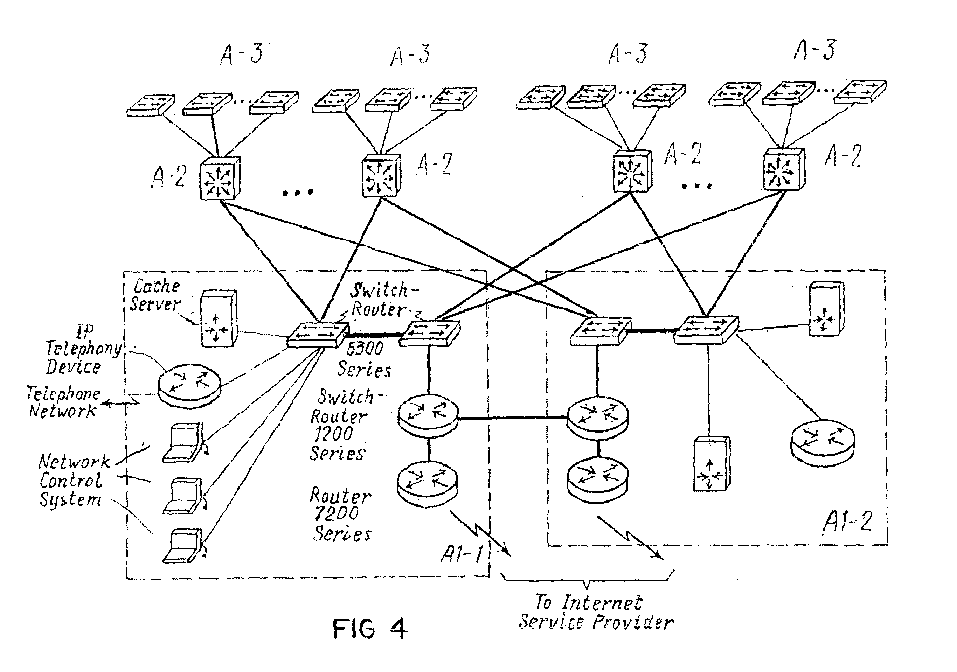

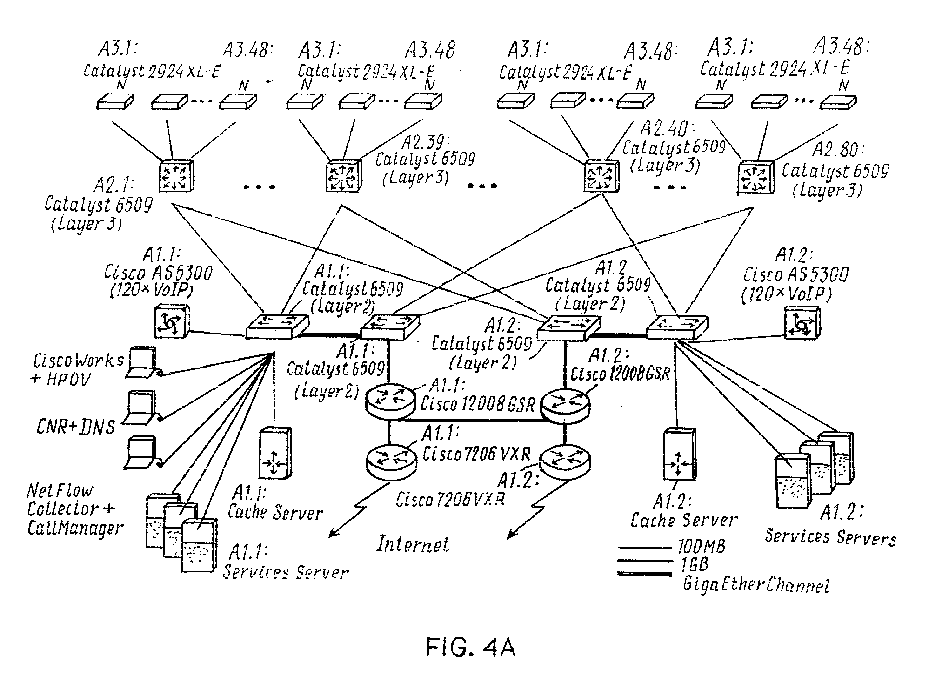

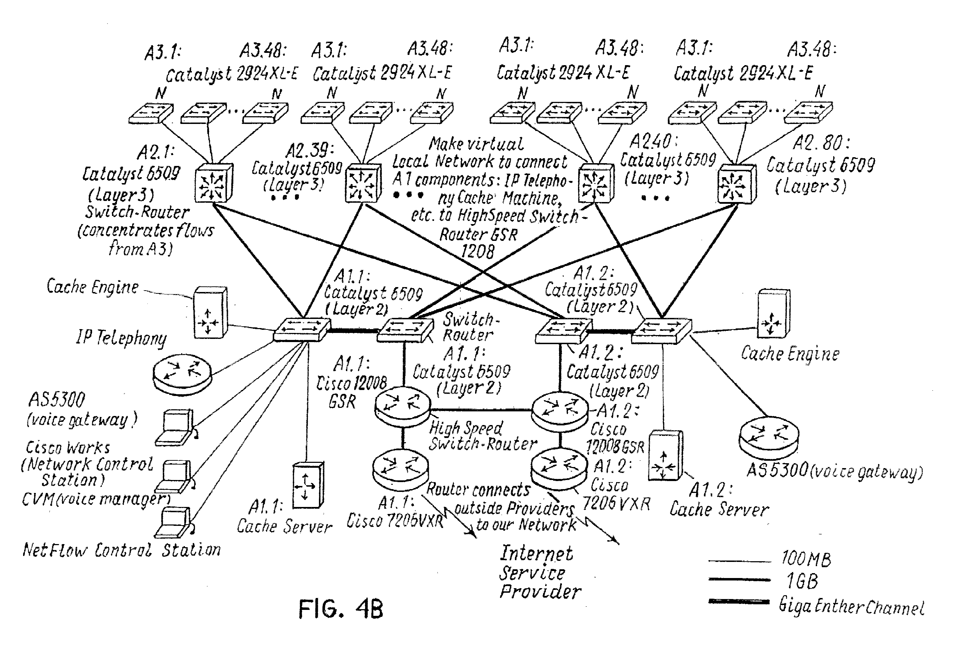

Each A-3 unit **250** is preferably the main operating point within the building of a high-speed local area network formed by the personal computers **280** connected to the building's copper wires **145** by high-speed subscribers' HSCs **260.** An A-3 unit **250** performs switching and routing for all computers that are part of its local network. The A-3 unit **250** is preferably connected to an A-2 unit **230** by fibre-optic cables **255** installed in the air, with the support of feeders located on the roof of the building, although ground-based cables or cables of non-fibre-optic composition could also be used. Preferred components for the construction of the A-3 units are listed below in Table 3. The physical connections between the A-1, A-2, and A-3 units and their components are depicted in **FIGS. 3, 4,** and **4A.**

Thus, for apartment units that include an HSC card **260,** a personal computer **280** can communicate over the Internet via the relatively high-speed path formed by units A-3 **250,** A-2 unit **230,** and A-1 unit **220** and their associated optical cables **205, 215,** and **255.** However, for apartments which merely include an LSM interface card **270** (i.e., the apartment is a low-speed subscriber) the personal computer **280** communicates with the Internet via the alternative path formed by SST **140,** ITS **130,** LSM **240,** A-2 unit **230,** A-1 unit **220** and their associated wires and optical cables.

Preferably, LSM units **240** and **270** use a 10Base-S™ system (available from OLENCOM Electronics Ltd., Yokneam Illit 20692, P.O.B. 196, Israel), or a similar system, for transmission over copper wires. Similarly, A-3 units **250** and HSC units **260** communicate with the same 10Base-S protocol.

The 10Base-S system provides an extension to the IEEE 802.3 compliant 10BaseT Ethernet standard network. It combines DSL modulation technologies with Ethernet technology. The 10Base-S system provides a point-to-point link that can deliver half or full duplex 10BaseT Ethernet at the full 10 Mbps data rate. For telephone applications, it supports transmission of POTS or ISDN or PBX signaling simultaneously with data over the standard telephone-grade wire infrastructure.

The 10Base-S system employs Quadrature Amplitude Modulation (QAM). QAM modulation uses both signal amplitude and phase to define each symbol. 10Base-S uses the most sophisticated QAM technology with various QAM modulations (QAM-256, QAM-128, QAM-64, QAM-32, QAM-16, QAM-8 and QAM-4). A specific modulation is chosen according to the line specification and the rate definition. 10Base-S is designed to support multi-QAM in order to achieve performance as close to the physical limit as possible, while maintaining low cost and low power. 10Base-S has higher capacity than both DMT TDD and regular QAM, when comparing capacity calculations (the calculation of physical capacity limitations).

10Base-S facilitates the transport of symmetrical bi-directional data over unshielded, copper twisted-pair wires. The 10Base-S system employs Frequency Division Duplexing (FDD) to separate the downstream channel, the upstream channel, and POTS, ISDN, or PBX signaling services, in the frequency domain. This enables service providers to overlay 10Base-S on existing POTS, ISDN, or PBX signaling services without disruption. Both 10Base-S and POTS/ISDN/FBX services may be transmitted over the same line without interfering with each other. Ethernet data is encapsulated onto a continuous stream of cells in a proprietary scheme. The system applies a self-synchronizing scrambler mechanism to this continuous, non-bursty data cell stream. The scrambler is initialized to a random value providing better de-correlation of the transmitted signals, and thus better FEXT performance when transmitted through a multi-pair copper cable. A sophisticated Reed-Solomon (RS) error correction code is also applied to the data stream, providing strong error detection and recovery capabilities. Upon reception, the Ethernet data is reassembled from the error free cell stream. 10Base-S technology operates at a continuous raw symmetrical bi-directional data rate of 11.25 Mbps. This allows transport of Ethernet data at the full standard line rate of 10 Mbps, in full duplex. The transport overhead does not reduce the Ethernet bandwidth and the system may thus be used totally transparently in a 10 Mbps Ethernet network.

The 10Base-S system may be used as an essentially point-to-point communication system. The core data pump is a blind modem, capable of supporting point-to-multi-point transmission systems. Operation in the point-to-point arrangement avoids the need for the collision detection scheme by frequency separation of the downstream from the upstream and at the same time supports full duplex operation. The physical Ethernet interface is a standard RJ-45 socket. The user may connect standard 10BaseT equipment, such as an Ethernet switch or an Ethernet NIC card, to the 10Base-S equipment using standard Ethernet cables.

The 10Base-S transmissions on wires **145** do not interfere with the radio transmissions on the same wires because the power and frequency of the 10Base-S transmissions is substantially different from those of the radio transmissions. More specifically, the radio signals are of a much lower frequency content (0-10k Hz) than the 10Base-S transmissions. Further, the radio signals have substantially more power than the 10Base-S transmissions. Thus, when a user activates a radio unit connected to radio socket **150** to listen to a radio program, the loudspeaker of the radio unit largely filters out the 10Base-S signals due to their relatively high frequency. Further, to the extent the 10Base-S signals include frequency components within the bandwidth of the loudspeaker, they are not perceptibly reproduced by the speaker because of their low power content.

**FIGS. 4, 4A,** and **4B** show in greater detail the components used to construct units A-1, A-2, and A-3 and how they are connected together.

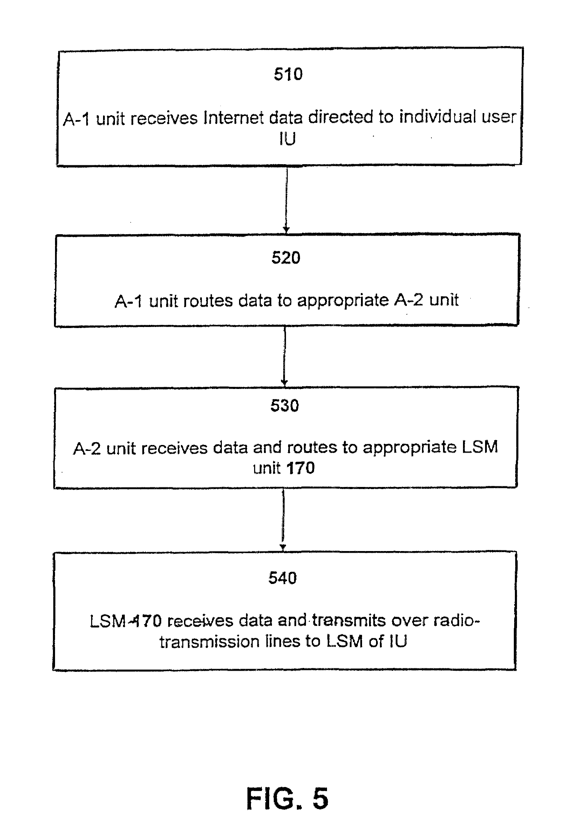

**FIG. 5** illustrates, in general, the operation of the network when an individual user accesses the Internet via a low speed modem **270.** In the example shown, at step **510,** an A-1 unit **220** receives Internet data directed to the individual user. The A-1 unit **220** then at step **520** routes the received data to an A-2 unit **230** that services an area network of which the user is a member. The A-2 unit at step **530** receives the data and routes it to the LSM unit **240** that serves, typically with other buildings, the building in which the user resides. At step **540,** the LSM unit **240** receives the data and transmits it (preferably, using 10Base-S protocol) over radio-transmission lines through an STS **140** to the user's PC **280** via LSM **270** (preferably, a 10Base-S end-user unit).

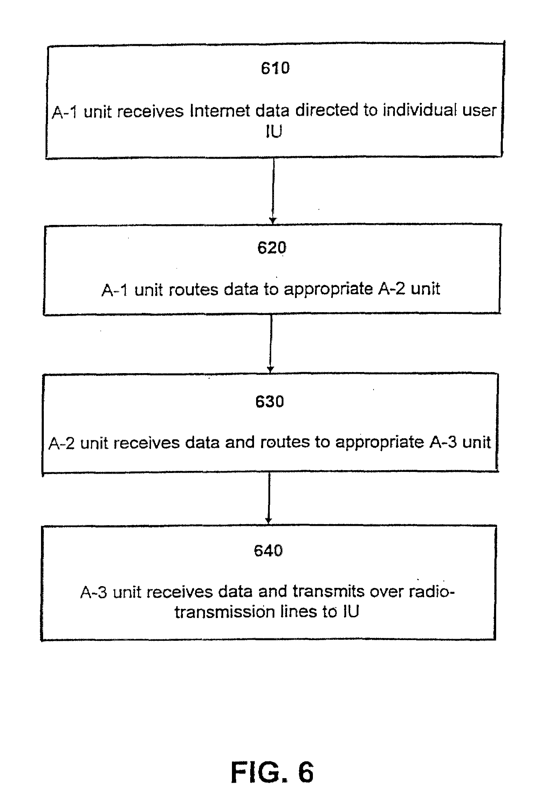

**FIG. 6** illustrates, in general, the operation of the network when an individual user accesses the Internet via an HSC **260.** In the example shown, at step **610** an A-1 unit **220** receives Internet data directed to the individual user. At step **620** the A-1 unit **220** routes the data to the A-2 unit **230** that serves an area network of which the user is a member. The A-2 unit **230** at step **630** receives the data and routes it to an A-3 unit **250** that serves user's building. At step **640** the A-3 unit receives the data and transmits it over radio-transmission lines **145** to the user's PC **280** via HSC **260,** using the 10Base-S protocol.

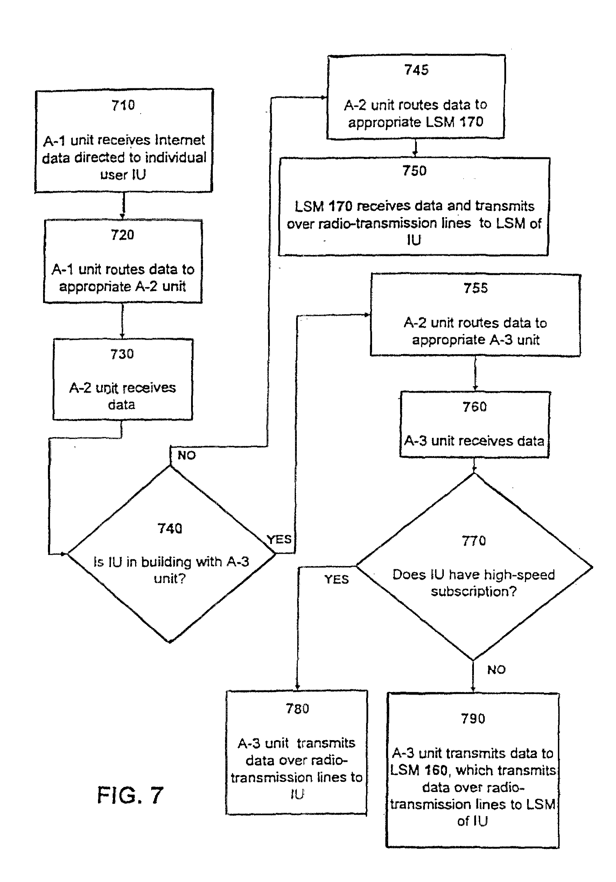

In one embodiment of the network, each A-2 unit **230** is connected to both a plurality of LSMs **240** and a plurality of A-3 units **250.** High-speed subscribers are connected to the A-2 units **230** via A-3 units **250,** and copper-wire-based, narrowband subscribers are connected to the A-2 units **230** via LSMs **240. FIG. 7** depicts, in general, the operation of such a network.

At step **710,** an A-1 unit **220** receives Internet data directed to an individual user. At step **720** the A-1 unit routes the data to an A-2 unit **230** that serves the area network of which the user is a member. At step **730,** the A-2 unit **230** receives the data. At step **740,** the A-2 unit **230** determines the identity of the user to which the data is directed, and checks the user's identity against a database of users.

If the user is a high-speed-service subscriber, and thus located in a building that has an A-3 unit **250,** then at step **755** the A-2 unit routes the data via high-speed lines **255** to the A-3 unit **250** that services the user's building. At step **760** the A-3 unit **250** receives the data, and at steps **770** and **780** the A-3 unit **250** routes the data over the building's radio-transmission lines to the user's LSM **270.**

Returning to step **740,** if the user is not a subscriber to high-speed services, then at step **745** the A-2 unit **230** routes the data to an LSM **240** that serves the user's building, and at step **750** the LSM **240** receives the data and transmits it over radio-transmission lines to the user's LSM **270.**

In another embodiment, when a building (such as building **235)** has both high-speed and low-speed subscribers, all Internet signals are sent from the A-2 unit **230** to the building's A-3 unit **250**. This includes those signals directed to low-speed subscribers in the building. In this embodiment, the LSM units **270** are 10Base-S units, so the A-3 unit **250** transmits Internet signals directed to low-speed subscribers directly to their LSM units **270.**

In a further alternate embodiment, the A-3 unit is connected to an LSM unit (not shown) that in turn is connected to the intra-building copper-wire network **145.** Then, if a packet is to be sent to a low-speed subscriber, the A-3 unit receives it and routes it to the attached LSM, which then sends it to the user's LSM **270.** In a still further embodiment, the LSM attached to the A-3 unit is capable of receiving signals from an LSM unit **240** and routing them to the attached A-3 unit. This configuration has the advantage of redundancy: if the fibre-optic communication line to the A-3 unit is broken, high-speed subscribers can still use the low-speed system, and if the copper-wires (or LSMs **240)** are down, low-speed subscribers can still receive Internet services via the A-3 unit.

While the subject invention has been particularly shown and described with reference to preferred embodiments of the systems and methods thereof, it will also be understood by those of ordinary skill in the art that various changes, variations, and modifications in form, details, and implementation may be made therein without departing from the spirit and scope of the invention as defined by the appended claims.

For example, although the A-1, A-2, A-3, LSM, and HSC units have been described herein with great specificity regarding part numbers and configurations, those skilled in the art will recognize that the functionality of each of these units can be substantially duplicated by a wide variety of configurations of various components by various manufacturers.

Also, although the above embodiments have been described primarily as they apply to radio-transmission networks, those skilled in the art will recognize that the subject invention also can be applied in other contexts. For example, ordinary telephone lines also form a copper-wire network to which the invention can be applied.

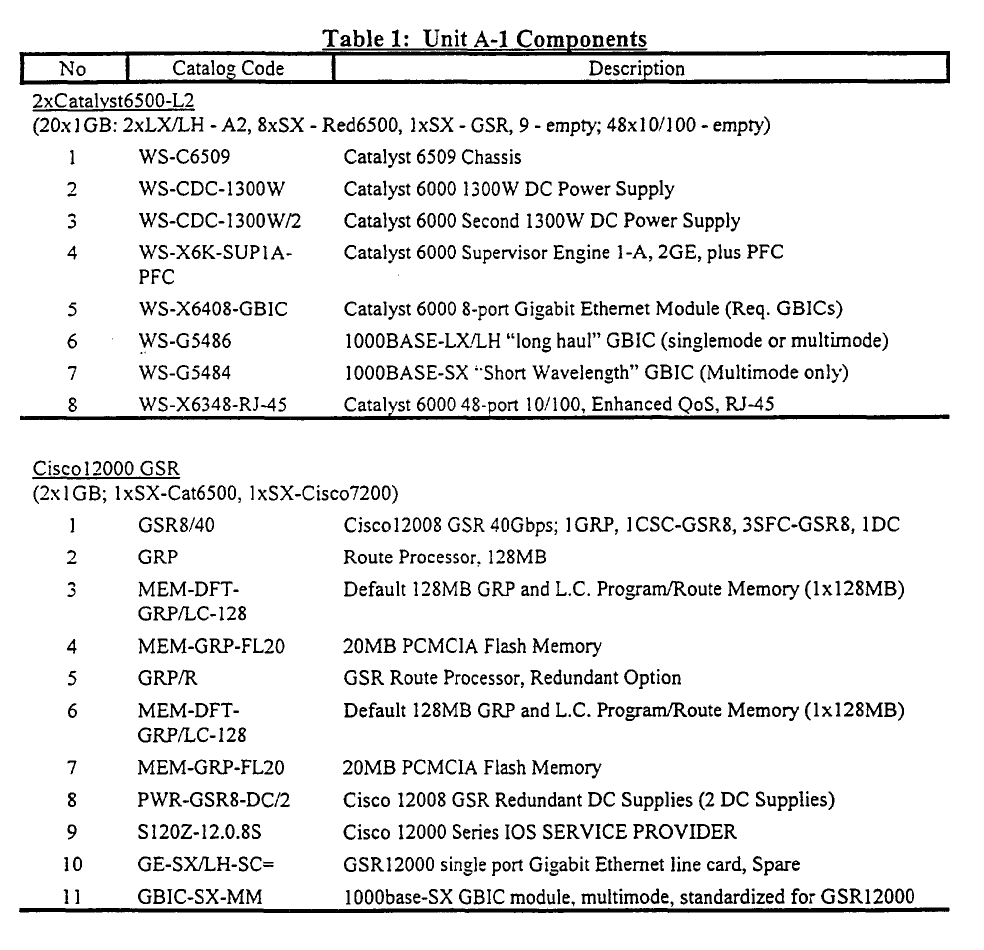

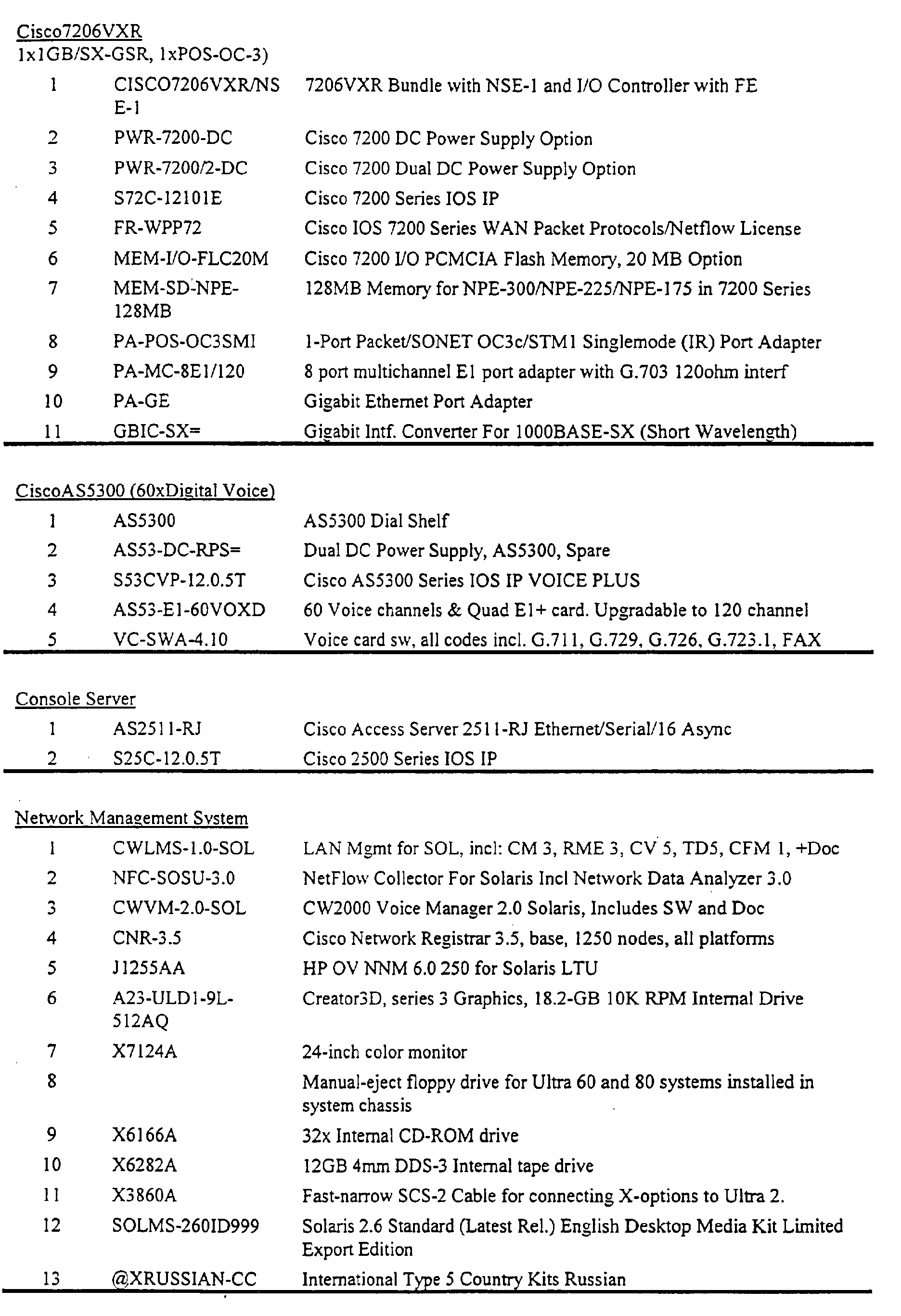

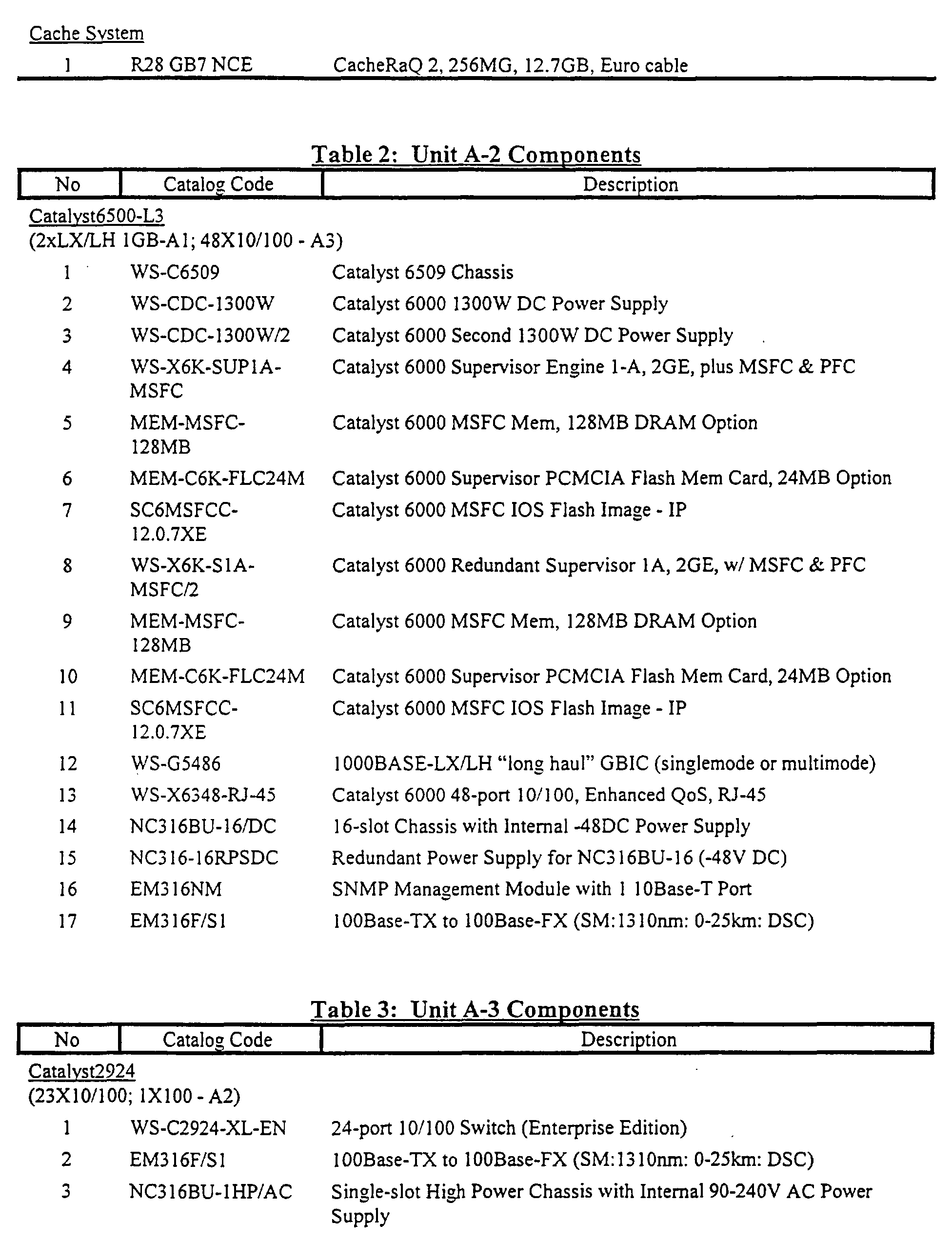

## Claims

1. A method of providing Internet services, comprising the steps of:
(a) receiving Internet data directed to an end-user;
(b) transmitting said data to said end-user via a modem connected to a radio-transmission network.

2. The method of claim 1, wherein said step of transmitting does not adversely affect radio signals transmitted over said radio-transmission network.

3. A method of providing Internet-related services, comprising the steps of:
(a) receiving Internet data directed to a first end-user;
(b) determining a level of network service to which the first end-user is entitled;
(c) if said first end-user is entitled to high-speed network service, routing said data to said first end-user via high-speed lines; and
(d) if said first end-user is only entitled to low-speed network service, routing said data to said first end-user via modem-to-modem service.

4. A method as in claim 3, wherein said modem-to-modem service is over radio-transmission lines.

5. A method as in claim 3, wherein a portion of said high-speed network service takes place over fibre-optic lines, and a portion takes place over radio-transmission lines.

6. A method as in claim 5, wherein said high-speed network service is performed in a frequency range that does not significantly interfere with radio broadcasts over said radio-transmission lines.

7. A method as in claim 3, wherein if said first end-user is not entitled to high-speed service, but in said first end-user's building there is a second end-user who is entitled to high-speed service, then said data is routed via high-speed lines to said first end-user's building, then routed to said first end-user via modem-to-modem service.

8. A method as in claim 7, wherein said modem-to-modem service is over radio-transmission lines.

9. A method as in claim 8, wherein said modem-to-modem service is performed in a frequency range that does not significantly interfere with radio broadcasts over said radio-transmission lines.

10. A system for delivery of Internet-related services, comprising:
(a) one or more central switching and routing units;
(b) one or more area switching and routing units, each of which is connected to at least one central switching and routing unit;
(c) a first set of low-speed modem units, each of which is connected to at least one area switching and routing unit; and
(d) a second set of low-speed modem units, each of which is connected to one or more low-speed modem units in said first set of low-speed modem units via a copper-wire network, and each of which is connected to an end-user's computer.

11. A system as in claim 10, wherein at least one of said one or more area switching and routing units is connected to at least one central switching and routing unit by fibre-optic cable.

12. A system as in claim 10, wherein said first set of low-speed modems comprises at least one 10Base-S switch.

13. A system as in claim 10, wherein said second set of low-speed modems comprises at least one 10Base-S switch.

14. A system as in claim 10, wherein said copper-wire network is a radio-transmission grid.

15. A system for delivery of Internet-related services, comprising:
(a) one or more central switching and routing units;
(b) one or more area switching and routing units, each of which is connected to at least one central switching and routing unit;
(c) one or more local switching and routing units, each of which is connected to at least one area switching and routing unit, wherein each local switching and routing unit is connected to one or more end-user's computers via copper-wire lines.

16. A system as in claim 15, wherein said copper-wire lines are radio-transmission lines.

17. A system as in claim 15, wherein at least one of said one or more area switching and routing units is connected to at least one central switching and routing unit by fibre-optic cable.

18. A system as in claim 15, wherein at least one of said one or more local switching and routing units is connected to at least one area switching and routing unit by fibre-optic cable.

19. A system as in claim 15, wherein at least one of said one or more local switching and routing units communicates with one or more end-user's computers using a 10Base-S protocol.

20. A system for delivery of Internet-related services, comprising:
(a) one or more central switching and routing units;
(b) one or more area switching and routing units, each of which is connected to at least one central switching and routing unit;
(c) one or more local switching and routing units, each of which is connected to at least one area switching and routing unit;
(d) a first set of low-speed modem units, each of which is connected to at least one area switching and routing unit;
(e) a second set of low-speed modem units, each of which is connected to an end-user's computer; and
(f) a set of high-speed interface card units, each of which is connected to a local switching and routing unit and to an end-user's computer.

21. A system as in claim 20, wherein said first set of low-speed modem units comprises at least one 10Base-S switch.

22. A system as in claim 20, wherein said second set of low-speed modem units comprises at least one 10Base-S switch.

23. A system as in claim 20, wherein said set of high-speed interface card units comprises at least one 10Base-S switch.
